# EUROPÄISCHE PATENTANMELDUNG

(11) **EP 2 703 713 A2**
(43) Veröffentlichungstag der Anmeldung: **05.03.2014**
(21) Anmeldenummer: 13180068.2
(22) Anmeldetag: 12.08.2013
(51) Int. Cl.: F23D 11/36, F23D 11/26

(54) **Ölvormischbrenner**

(30) Priorität: 31.08.2012 DE 102012017240
(71) Anmelder: ROBERT BOSCH GMBH, 70442 Stuttgart (DE)
(72) Erfinder: Rausch, Rainer, 36304 Alsfeld (DE); Geschwend, Thomas, 35578 Wetzlar (DE); Hetche, Juergen, 35102 Lohra (DE); Schroeder, Thorsten, 35305 Gruenberg (DE); Medeiros, Antonio, 35423 Lich (DE); Cecen, Sadik, 35102 Lohra (DE); Lang, Raphael, 35305 Gruenberg (DE); Ripplinger, Hans-Joachim, 35460 Staufenberg (DE)

(57) **Zusammenfassung**

Ölvormischbrenner mit einem Brennelement, einer Brenneroberfläche auf der äußeren Mantelfläche, einer Verteilkammer (2) unterhalb der Brenneroberfläche, einem Dosierelement (3), mit welchem eine zentrale Öleinspritzung erfolgt, einem an ein stromaufwärts angeordnetes Gebläse angeschlossenen Verbrennungsluftkanal sowie einem Luftwärmetauscher für die Vorwärmung der Verbrennungsluft im Bereich der Brenner-oberfläche.

Aufgabe der Erfindung ist es, bei einem Ölvormischbrenner die Verbrennungsqualität und die Zuverlässigkeit, besonders im Hinblick auf die Vermeidung von Ablagerungen, zu optimieren.

Erfindungsgemäß ist daher vorgesehen, das Dosierelement (3) für die zentrale Öleinspritzung mit einem Wärme aufnehmenden Aufsatzteil (4) zu beaufschlagen, um damit eine Wärmeableitung weg vom Dosierelement (3) über das Wärme aufnehmende Aufsatzteil (4) auf andere Bauelemente zu bewerkstelligen.

## Beschreibung

Die Erfindung betrifft einen Ölvormischbrenner nach dem Oberbegriff des Patentanspruches 1.

Derartige Ölvormischbrenner besitzen ein zylindrisches Brennelement mit einer Brenneroberfläche auf der äußeren Mantelfläche. Um eine zentrale Öleinspritzvorrichtung befindet sich in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öleinspritzvorrichtung, wobei es sich um ein Einspritzventil oder eine Öldüse, welche an einem Düsenstock mit Ölvorwärmer befestigt ist, handeln kann. Stromaufwärts der Öleinspritzvorrichtung befindet sich ein Verbrennungsluftkanal mit Verbindung zu einem Gebläse. Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Der im Patentanspruch 1 angegebenen Erfindung liegt das Problem zugrunde, die Bildung eines sogenannten Ölkuchens (Oil-Cake) an Bauteilen von Ölbrennern, die erhöhten Temperaturen, erfahrungsgemäß bei Temperaturen über 120°C, ausgesetzt sind, zu unterbinden. Vor allem bei Ölbrennern die auf dem Prinzip der Ölverdampfung basieren, wobei der Brennstoff auf einen heißen Körper oder in die heiße Verbrennungsluft dosiert wird, treten verstärkt Ablagerungen, sogenannte Vercrackungen auf. In den Bereichen in denen das Öl im dampfförmigen Zustand vorliegt, herrschen hohe Temperaturen. Zu diesen Bereichen gehören u.a. die Dosierelemente wie Einspritzdüsen oder Einspritzventile, welche in einem gewissen Zeitraum einer zunehmenden Vercrackung ausgeliefert sind. Da der Oil-Cake im Laufe der Zeit permanent anwächst und sich verfestigt, kann dies zu einer Durchflussverringerung des Brennstoffes im Dosierelement führen, was wiederum Leistungseinbußen und schlechtere Abgaswerte zur Folge haben kann. Im Extremfall kommt es zu einem Brennerausfall durch vollständige Unterbindung der Brennstoffzufuhr. Es besteht zwar die Möglichkeit, der Vercrackung mit regelmäßigen Reinigungen entgegen zu treten, jedoch sind hierfür zeitaufwendige Demontage-, Reinigungs- und Montagearbeiten nötig, welche von Fachpersonal durchgeführt werden müssen. Für diese Maßnahmen ist ein Stillstand der Anlage notwendig. Dadurch steht in diesem Zeitraum weder eine Warmwasser- noch eine Heizwärmeversorgung zur Verfügung.

Der Erfindung liegt daher die Aufgabe zugrunde, bei einem Ölvormischbrenner die Verbrennungsqualität und die Zuverlässigkeit, besonders im Hinblick auf die Vermeidung von Ablagerungen, zu optimieren.

Erfindungsgemäß wurde dies mit den Merkmalen des Patentanspruches 1 gelöst. Vorteilhafte Weiterbildungen sind den Unteransprüchen zu entnehmen.

Die mit der Erfindung erzielten Vorteile bestehen insbesondere darin, dass bei einem Ölvormischbrenner mit einem Brennelement, einer Brenneroberfläche auf der äußeren Mantelfläche, einer Verteilkammer unterhalb der Brenneroberfläche, einem Dosierelement wie Düsen oder Einspritzventilen, als zentrale Öleinspritzvorrichtung, einem an ein stromaufwärts angeordnetes Gebläse angeschlossenen Verbrennungsluftkanal sowie einem Luftwärmetauscher für die Vorwärmung der Verbrennungsluft im Bereich der Brenneroberfläche, gekennzeichnet durch das Dosierelement, welches in Wirkverbindung mit der Oberfläche eines Wärme aufnehmenden Aufsatzteiles steht, wobei die Wärmeableitung durch das Wärme aufnehmende Aufsatzteil erfolgt. Dabei wird die Wärme durch Wärmestrahlung und/oder Konvektion an die Umgebung und/oder an andere, räumlich naheliegende, Bauteile abgegeben. Hierdurch werden die Standzeiten von Bauteilen, die üblicherweise durch Oil-Cake Bildung schneller einen Verschleiß bzw. einer Verstopfung des Dosierelementes unterliegen, verhindert bzw. erheblich verringert. Außerdem kann der Brenner wirtschaftlicher und ökologischer betrieben werden, da eine optimale Verbrennung über einen möglichst langen Zeitraum gewährleistet werden kann. Des Weiteren kann ein Brennerausfall aufgrund von Oil-Cake Bildung im Dosiersystem ausgeschlossen werden.

In einer bevorzugten Ausführungsform ist das Wärme aufnehmende Aufsatzteil so gestaltet, dass dieses soweit wie möglich den vorderen Bereich des Dosierelements großflächig umfasst. Dadurch wird eine größtmögliche Fläche des Dosierelements beaufschlagt, um mit Hilfe der anliegenden Fläche des Aufsatzteils möglichst viel thermische Energie zu entziehen.

Eine vorteilhafte Ausgestaltung der Erfindung zeigt ein Wärme aufnehmendes Aufsatzteil auf, welches die Formgebung eines Rotationskörper aufweist. Dies führt zu einer gleichmäßigen Wärmeableitung durch das Bauteil, ohne dass möglicherweise innere Spannungsspitzen infolge der thermischen Energieaufnahme auftreten. Es sind grundsätzlich auch andere geometrische Formen vorstellbar, insbesondere symmetrische Formen, die zu einer gleichmäßigen Wärmeableitung führen können.

Eine weitere vorteilhafte Ausführungsform sieht vor, dass das Wärme aufnehmende Aufsatzteil aus einem Werkstoff mit hohen Wärmeleitkoeffizienten besteht, wie beispielsweise Kupfer, Aluminium, Messing, Stahl oder Legierungen, ebenso wie APG (Annealed Pyrolytic Graphit) oder aus keramischen Werkstoffen. Auch Verbundwerkstoffe aus den zuvor genannten Materialien sind denkbar.

In einer bevorzugten Ausführungsform weist das Dosierelement in etwa den gleichen Ausdehnungskoeffizienten auf wie das Wärme aufnehmende Aufsatzteil, um Spannungen zwischen den Bauteilen zu vermeiden und um unerwünschte Luftspaltbildung zwischen den einzelnen Bauteilen zu vermeiden, damit eine optimierte Verbrennung gewährleistet werden kann.

Vorteilhafterweise zeichnet sich das Wärme aufnehmende Aufsatzteil, welches am Schaft des Dosierelementes beginnend, durch eine konisch zulaufende Form zur Ausmündung hin bzw. eine konisch auslaufende Form weg von der Ausmündung des Dosierelementes aus. Dadurch kann frühestmöglich das Volumen zur Wärmeableitung durch das Aufsatzteil vergrößert werden und somit erfolgt eine Steigerung der thermischen Energieableitung. Auch andere geometrische Formen, insbesondere zur Schaffung eines größeren Volumens, wären denkbar.

Eine weitere bevorzugte Ausführungsform sieht vor, die abzuleitende Wärme vom Dosierelement über das Aufsatzteil auf ein oder mehrere benachbarte bzw. naheliegende Bauelemente zu leiten. Die Bauelemente sind bevorzugt formschlüssig mit dem Aufsatzteil verbunden, aber auch kraft- und stoffschlüssige Verbindungen sind umsetzbar. Die wärmeleitfähige Oberfläche ist vorzugsweise das Gehäuse des Brenners. Auf Grund der großen Oberfläche und der dünnen Materialstärke erfolgt eine gute Wärmeabgabe an die Umwelt.

Vorzugsweise ist das Wärme aufnehmende Aufsatzteil als Kühlkörper ausgebildet. Damit wird eine größere Oberfläche des Wärme ableitenden Bauteils erzielt und eine Beschädigung durch Überhitzung vorgebeugt.

Des Weiteren ist in vorteilhafter Weise der Kühlkörper mit oberflächenvergrößernden Kühlrippen, Kühlsicken, ringförmigen Lamellen oder dergleichen ausgebildet, um wiederum die Wärmeableitung zu begünstigen.

Eine vorteilhafte Ausgestaltung der Erfindung hinsichtlich des Wärme aufnehmenden Aufsatzteils weist eine aktive Kühlung oder passive Kühlung auf, bei der eine Umströmung bzw. Durchströmung mit einem Wärme aufnehmenden Fluid erfolgt. Um einen maximalen Wärmeaustrag zu erzielen, ist auch eine Kombination der aktiven und passiven Kühlung denkbar.

In einer bevorzugten Ausführungsform ist das durch- bzw. umströmende Fluid des Wärme aufnehmenden Aufsatzteils Heizwasser, Öl, Luft oder ein Wasser-Glykol-Gemisch. Beispielsweise ist bei einer Ölkühlung eine Durchlaufkühlung vorgesehen und somit erfolgt ein einmaliger Gebrauch des Fluids. Bei Heizwasser erfolgt eine Zirkulationskühlung, d.h. ein Kühlkreislauf dient zum Abtransport der thermischen Energie.

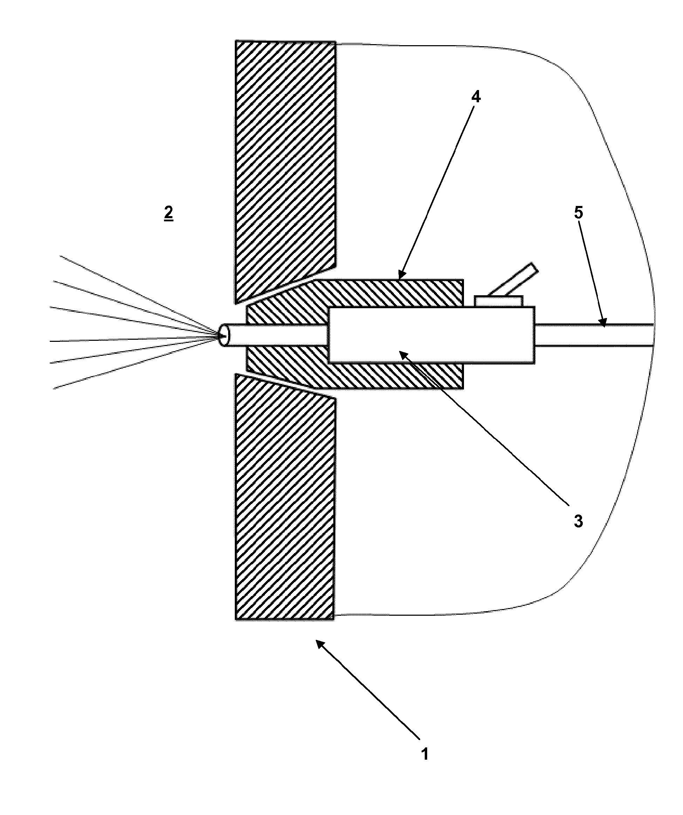

Die Zeichnung stellt ein Ausführungsbeispiel der Erfindung dar und zeigt in einer einzigen Figur einen Teilschnitt durch einen Ölvormischbrenner, nämlich ein Dosierelement mit einem Wärme aufnehmenden Aufsatzteil im Längsschnitt.

Der Ölvormischbrenner besteht im Wesentlichen aus einem nicht dargestellten Brennelement mit einer Brenneroberfläche auf der äußeren Mantelfläche, einer Verteilkammer 2 unterhalb der Brenneroberfläche, einem Dosierelement 3 als zentrale Öleinspritzvorrichtung, einem an ein stromaufwärts angeordnetes Gebläse angeschlossenen Verbrennungsluftkanal sowie einem Luftwärmetauscher für die Vorwärmung der Verbrennungsluft im Bereich der Brenneroberfläche. Das Dosierelement 3 mit dem Wärme aufnehmenden Aufsatzteil 4 ist in einer Begrenzungswand 1, welche den Brennraum von der Umwelt abschirmt, positioniert und mit einer Brennstoffzufuhr 5 verbunden. Da der Ölvormischbrenner den Brennstoff auf einen heißen Körper oder in die heiße Verbrennungsluft dosiert, entstehen Bereiche mit erhöhtem Temperaturniveau in denen es verstärkt zur Bildung eines Oil-Cakes kommt, vor allem wenn das Öl in dampfförmigem Zustand vorliegt. Dies tritt auch im Bereich von Dosierelementen 3 wie Düsen oder Einspritzventilen auf und führt aufgrund der Vercrackung zu einer Durchflussminderung des Brennstoffs oder sogar zur Unterbrechung der Brennstoffzufuhr 5. Um diesem Mangel entgegen zu treten beziehungsweise um diesen zu verhindern, wird erfindungsgemäß das Dosierelement 3 mit Hilfe eines Wärme aufnehmenden Aufsatzteils 4 gekühlt. Die bevorzugte Ausgestaltung des Wärme aufnehmenden Aufsatzteils 4 als Kühlkörper mit einer oberflächenvergrö-βernden Geometrie, die mit einem Fluid durch- bzw. umströmt wird, weist eine hohe Wärmeableitung auf. Dabei kann beispielweise das Fluid Öl sein, welches ohnehin für die Verbrennung vorgewärmt werden muss. Diese Wärmeableitung wird durch die konisch auslaufende Form des Wärme aufnehmenden Aufsatzteils 4, d. h. mit einer Verjüngung zur Ausmündung des Dosierelementes 3 hin, unterstützt. Des Weiteren wird die Wärmeableitung von der Rotationssymmetrie und dem hohen Wärmeleitkoeffizienten des Wärme aufnehmenden Aufsatzteils 4 begünstigt.

## Patentansprüche

1. Ölvormischbrenner mit einem Brennelement, einer Brenneroberfläche auf der äußeren Mantelfläche, einer Verteilkammer (2) unterhalb der Brenneroberfläche, einem Dosierelement (3) als zentrale Öleinspritzvorrichtung, einem an ein stromaufwärts angeordnetes Gebläse angeschlossenen Verbrennungsluftkanal sowie einem Luftwärmetauscher für die Vorwärmung der Verbrennungsluft im Bereich der Brenneroberfläche, **dadurch gekennzeichnet, dass** das Dosierelement (3) in Wirkverbindung mit der Oberfläche eines Wärme aufnehmenden Aufsatzteiles (4) steht, wobei die Wärmeableitung durch das Wärme aufnehmende Aufsatzteil (4) erfolgt und die Wärme durch Wärmestrahlung und/oder Konvektion an die Umgebung und/oder an andere, räumlich naheliegende, Bauteile abgegeben wird.

2. Ölvormischbrenner nach Anspruch 1,
**dadurch gekennzeichnet, dass** das Aufsatzteil (4) das Dosierelement (3) im vorderen Bereich möglichst weitläufig umfasst.

3. Ölvormischbrenner nach einem der Ansprüche 1 bis 2,
**dadurch gekennzeichnet, dass** das Wärme aufnehmende Aufsatzteil (4) in seiner Formgestaltung als rotationssymmetrischer Körper ausgebildet ist.

4. Ölvormischbrenner nach einem der Ansprüche 1 bis 3,
**dadurch gekennzeichnet, dass** das Wärme aufnehmende Aufsatzteil (4) aus einem Werkstoff mit einem hohen Wärmeleitkoeffizienten besteht.

5. Ölvormischbrenner nach einem der Ansprüche 1 bis 4,
**dadurch gekennzeichnet, dass** das Wärme aufnehmende Aufsatzteil (4) in etwa den gleichen Ausdehnungskoeffizienten aufweist wie das Dosierelement (3).

6. Ölvormischbrenner nach einem der Ansprüche 1 bis 5,
**dadurch gekennzeichnet, dass das** Wärme aufnehmende Aufsatzteil (4) am Schaft des Dosierelementes (3) eine konisch zur Ausmündung des Dosierelementes (3) hin zulaufende Form aufweist.

7. Ölvormischbrenner nach einem der Ansprüche 1 bis 6,
**dadurch gekennzeichnet, dass** die abzuleitende Wärme auf benachbarte Bauelemente mit großer, dunkler und wärmeleitfähiger Oberfläche übertragen wird, wobei dies vorzugsweise mit dem formschlüssig verbundenen Wärme aufnehmenden Aufsatzteil (4) erfolgt.

8. Ölvormischbrenner nach einem der Ansprüche 1 bis 7,
**dadurch gekennzeichnet, dass** das Wärme aufnehmende Aufsatzteil (4) als Kühlkörper ausgebildet ist.

9. Ölvormischbrenner nach Anspruch 8,
**dadurch gekennzeichnet, dass** der Kühlkörper oberflächenvergrößernde Kühlrippen, Kühlsicken, ringförmige Lamellen oder dgl. aufweist.

10. Ölvormischbrenner nach einem der Ansprüche 1 bis 9,
**dadurch gekennzeichnet, dass** das Wärme aufnehmende Aufsatzteil (4) als passive und/oder aktive Kühlung ausgestaltet ist und mit Fluid durch- bzw. umströmt wird, wobei das Fluid Heizwasser, Öl oder Luft ist.
